Europäisches Patentamt

European Patent Office

Office européen des brevets

(11) Veröffentlichungsnummer: **0 262 628**
**B1**

# EUROPÄISCHE PATENTSCHRIFT

(45) Veröffentlichungstag der Patentschrift:
16.05.90

(51) Int. Cl.⁵: **B60K 23/08**

(21) Anmeldenummer: 87114095.0

(22) Anmeldetag: 26.09.87

(54) Antriebsvorrichtung für einen zuschaltbaren Radsatz.

(30) Priorität: 01.10.86 DE 3633424

(43) Veröffentlichungstag der Anmeldung:
06.04.88 Patentblatt 88/14

(45) Bekanntmachung des *Hinweises* auf die Patenterteilung:
16.05.90 Patentblatt 90/20

(84) Benannte Vertragsstaaten:
AT BE CH DE ES FR GB IT LI

(56) Entgegenhaltungen:
EP-A- 0 049 961
DE-U- 7 532 940
FR-A- 2 552 034
GB-A- 2 132 303

(73) Patentinhaber: DEERE & COMPANY, 1 John Deere Road,
Moline, Illinois 61265(US)

(72) Erfinder: Schwarz, Reinhard, Jahnstrasse 7,
D-7519 Gondelsheim(DE)
Erfinder: Nobis, Dieter, Reutestrasse 23,
D-7901 Lonsee-Halzhausen(DE)

(74) Vertreter: Feldmann, Bernhard et al, DEERE &
COMPANY European Office, Patent Department
Steubenstrasse 36-42 Postfach 503,
D-6800 Mannheim 1(DE)

## Beschreibung

Die Erfindung betrifft eine Antriebsvorrichtung für einen zuschaltbaren Radsatz, insbesondere für den einer vorderen Achse eines Kraftfahrzeuges, wobei zumindest ein weiterer ständig angetriebener Radsatz und in dem Antriebsstrang zu dem zuschaltbaren Radsatz ein Freilauf, der ein Voreilen des zuschaltbaren Radsatzes gegenüber dem ständig angetriebenen Radsatz zuläßt, eine Kupplung zum wahlweisen Zuschalten des zuschaltbaren Radsatzes und ein Differential für den zuschaltbaren Radsatz vorgesehen sind.

Bei dieser bekannten Antriebsvorrichtung (DE-GM 7 532 940) sind in dem Antriebsstrang zu dem zuschaltbaren Radsatz sowohl eine Kupplung wie auch ein Freilauf vorgesehen, so daß der Antrieb zu vorderen Rädern des Kraftfahrzeuges entweder über die Kupplung oder über den Freilauf erfolgt. Dies bedeutet, daß entweder eine feste Beziehung der Drehzahlen der beiden Radsätze zueinander unter allen Umständen erhalten bleibt und somit der voreilende Radsatz beinahe ständig auf dem Boden radiert oder daß ab einem bestimmten Schlupf an dem ständig angetriebenen Radsatz der Freilauf eine Antriebsverbindung zu dem wahlweise antreibbaren Radsatz herstellt. Bei dieser Antriebsvorrichtung ist der den vorderen Rädern zugeordnete Radsatz nur bedingt zuschaltbar, da entweder die Kupplung eingerückt ist oder der Freilauf bereit ist, ab einem bestimmten Schlupf an dem ständig angetriebenen Radsatz einen Antrieb zu dem nicht ständig angetriebenen Radsatz zu übertragen.

Dieser Antriebsvorrichtung haftet der Nachteil an, daß der Antrieb des zuschaltbaren Radsatzes nur unter bestimmten Umständen, nämlich dann, wenn dieser dem ständig angetriebenen Radsatz voreilt, abgeschaltet, ansonsten aber ständig zugeschaltet ist. Außerdem ist der Antriebsstrang zu dem zuschaltbaren Radsatz nicht gegen Überlastung geschützt.

Die der Erfindung zugrunde liegende Aufgabe wird darin gesehen, die Antriebsvorrichtung derart weiterzubilden, daß der Antriebsstrang zu dem zuschaltbaren Radsatz gegen Überlastung und nicht erforderliche Benutzung gleichzeitig geschützt ist.

Diese Aufgabe ist dadurch gelöst worden, daß in dem Antriebsstrang zu dem zuschaltbaren Radsatz die Kupplung und der Freilauf hintereinander geschaltet sind und die Kupplung wahlweise ein- oder ausgerückt sein kann und als Überlastkupplung wirkt.

Auf diese Weise werden die Vorteile sowohl der Kupplung als auch des Freilaufes in dem Antriebsstrang zu dem zuschaltbaren Radsatz genutzt, und es kann wegen der Kupplung weder ein ungewolltes Schließen des Antriebsstranges eintreten noch wird wegen des Freilaufes der zuschaltbare Radsatz angetrieben, solange dieser dem ständig angetriebenen Radsatz voreilt. Zudem wird eine Überlastung des Antriebsstranges vermieden, da die Kupplung ab einem bestimmten zu übertragenden Drehmoment durchrutscht oder ausrückt.

Aufgrund des Differentials und des Freilaufes wird der zuschaltbare Radsatz so lange nicht angetrieben, als dessen mittlere Geschwindigkeit der mittleren Geschwindigkeit des ständig angetriebenen Radsatzes voreilt.

Die Möglichkeit, den Freilauf in Abhängigkeit von verschiedenen Bedingungen zu sperren, führt z. B. beim Bremsen zu einer Übertragung der Bremskraft auch durch den zuschaltbaren Radsatz. Ferner wird bei einem Sperren des Freilaufes, solange ein Rückwärtsgang eingelegt ist, gewährleistet, daß auch bei Rückwärtsfahrt, wenn also der Freilauf immer überholen würde, ein Antrieb des zuschaltbaren Radsatzes möglich ist.

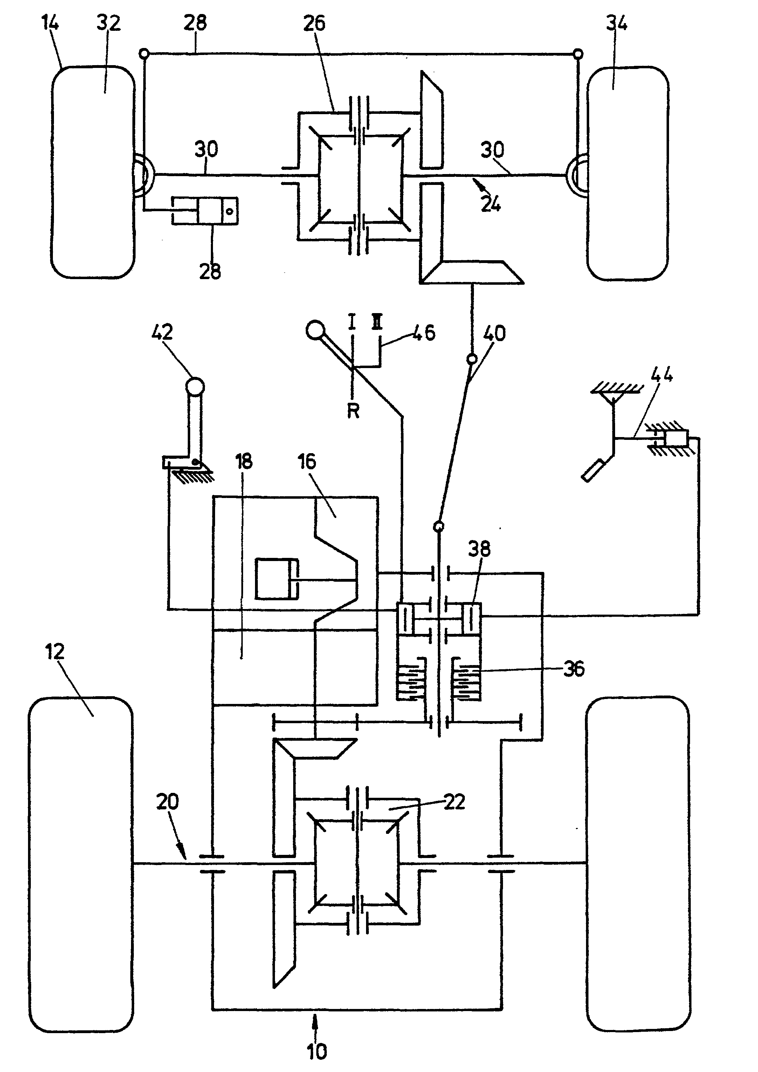

In der Zeichnung ist ein nachfolgend näher beschriebenes Ausführungsbeispiel der Erfindung schematisch dargestellt.

Ein Kraftfahrzeug 10, etwa ein Ackerschlepper, eine Baumaschine oder dergleichen, ist mit einem rückwärtigen und mit einem vorderen zuschaltbaren Radsatz 12 und 14 versehen, die von einem Motor 16 aus über ein Getriebe 18 angetrieben werden.

Der rückwärtige Radsatz 12 ist einer Achse 20 zugeordnet, die selbst wiederum ein Differential 22 enthält, das ständig über das Getriebe 18 angetrieben wird, solange dies gewünscht ist und entsprechende nicht dargestellte Kupplungen eingerückt sind.

Auch der vordere Radsatz 14 ist einer Achse 24 zugeordnet, die ein Differential 26 enthält. Die Achse 24 ist als Lenkachse ausgebildet und kann über geeignete Lenkvorrichtungen 28 gesteuert werden. Von dem Differential 26 aus erstreckt sich zu jeder Seite eine Halbwelle 30 zu einem linken und einem rechten Rad 32 und 34, um den Antrieb auf die Räder 32 und 34 zu übertragen.

Das Getriebe 18 überträgt den Antrieb auf eine hydraulisch beaufschlagbare Kupplung 36, die als Lamellenkupplung ausgebildet sein kann, und von dieser aus auf einen Freilauf 38, der einenends mit der Kupplung 36 und anderenends mit einer Antriebswelle 40 in Verbindung steht, die den Antrieb auf das Differential 26 überträgt. Die jeweiligen in dem Getriebe 18 vorgesehenen Übersetzungen sind normalerweise so gewählt, daß der vordere Radsatz 14 bei Geradeausfahrt um ca. 2 bis 5 % schneller angetrieben wird als der rückwärtige Radsatz 12.

Der Freilauf 38 ist derart ausgebildet und vorgesehen, daß er bei eingerückter Kupplung 36 und Vorwärtsfahrt keinen Antrieb auf das Differential 26 und somit auf den vorderen Radsatz 14 überträgt, solange dieses mit einer Geschwindigkeit umläuft, die größer ist als die, die ihm von der Antriebswelle 40 aufgegeben werden würde. Zusammen mit dem zu den Übersetzungen des Getriebes 18 Gesagten ergibt sich sodann, daß der vordere Radsatz 14 so lange kein Antriebsmoment auf den Boden aufbringt, als der rückwärtige Radsatz 12 nicht mindestens 2 bis 5 % Schlupf aufweist. Erst wenn dieser Schlupf erreicht ist, kann der Freilauf 38 eine feste Verbindung zwischen der Antriebswelle 40 und der Kupplung 36 herstellen.

Der Freilauf 38 kann aber auch in Abhängigkeit von anderen Begebenheiten als der Differenzgeschwindigkeit des vorderen und des rückwärtigen Radsatzes 14 und 12 gesperrt werden.

Hierzu sind beispielhaft folgende Möglichkeiten genannt, zu deren Durchführung ein Hebel 42, ein Bremspedal 44 und ein Schalthebel 46 vorgesehen sind, die alle separat über eine nicht gezeigte Steuereinrichtung mit dem Freilauf 38 verbunden sind.

Mit dem Hebel 42, der auf einer nicht dargestellten Fahrerplattform des Kraftfahrzeuges 10 angeordnet ist, kann vollkommen willkürlich durch einen Fahrer des Kraftfahrzeuges 10 der Freilauf 38 gesperrt und freigegeben werden.

Mittels des Bremspedals 44 wird der Freilauf 38 stets dann gesperrt, wenn nicht gezeigte Bremsen des Kraftfahrzeuges 10 betätigt werden. Auf diese Weise wird beim Bremsen eine Verbindung zwischen den Radsätzen 12 und 14 hergestellt, die es ermöglicht, das Bremsmoment der für den rückwärtigen Radsatz 12 vorgesehenen Bremsen auf den vorderen Radsatz 14 zu übertragen, so daß auf separate Bremsen an dem vorderen Radsatz 14 verzichtet werden kann.

Außerdem kann der Freilauf 38 über den Schalthebel 46 gesperrt werden, und zwar jeweils dann, wenn das Kraftfahrzeug 10 rückwärts gefahren werden soll. Bei Rückwärtsfahrt würde nämlich der Freilauf 38, der als einfacher Freilauf ausgebildet ist, immer überholen und könnte nie ein Antriebsmoment auf den vorderen Radsatz 14 übertragen. Somit wird gewährleistet, daß auch bei Rückwärtsfahrt ein Antriebsmoment auf beiden Radsätzen 12 und 14 zur Verfügung gestellt werden kann.

Es wäre auch denkbar, den Freilauf 38 in Abhängigkeit von der Stellung der Lenkvorrichtung 28 zu steuern.

Die Voraussetzung für die Entwicklung eines Antriebsmoments an dem vorderen Radsatz 14 ist selbstverständlich, daß die Kupplung 36 geschlossen ist und somit eine Verbindung zwischen dem Getriebe 18 und dem Freilauf 38 besteht. Die Kupplung 36 kann ebenfalls willkürlich von dem Fahrer oder in Abhängigkeit von anderen Betriebsbedingungen, etwa einem Bremsvorgang, einer Veränderung der Abgastemperatur des Motors 18, einer an einer nicht in die Zeichnung aufgenommenen Dreipunktgerätekupplung angreifenden Kraft und dergleichen, geschlossen bzw. geöffnet werden. Falls es sinnvoll ist, kann die Bedienung der Kupplung 36 und des Freilaufes 38 auch gemeinsam erfolgen.

Der Vorteil der Kupplung 36 liegt darin, daß es mit ihr möglich ist, den Antrieb des vorderen Radsatzes 14 unter bestimmten Umständen abzuschalten, so daß dadurch eine unnötige Beanspruchung der Kupplung 36, des Freilaufes 38 und der Antriebswelle 40 unterbleibt.

Auch in dem Fall, daß sowohl der Freilauf 38 als auch die Kupplung 36 geschlossen sind, können bei einer Kurvenfahrt aufgrund des Differentials 26 des vorderen Radsatzes 14 die zu dem linken und dem rechten Rad 34 und 32 führenden Halbwellen 30 mit unterschiedlichen Drehzahlen umlaufen. Es tritt also während der Kurvenfahrt zwischen der Halbwelle 30 zu dem linken Rad 34 und der Halbwelle 30 zu dem rechten Rad 32 keine Verspannung auf. Solange insbesondere während der Kurvenfahrt die mittlere Umdrehungszahl beider Halbwellen 30, die der Umdrehungszahl des Differentials 26 entspricht, eine Drehzahl der Antriebswelle 40 ergibt, die oberhalb der der Kupplung 36 liegt, tritt auch keine Verspannung zwischen dem vorderen und dem rückwärtigen Radsatz 14 und 12 aufgrund des dann überholenden Freilaufes 38 auf. Dieser Zustand tritt dann auf, wenn der vordere Radsatz 14 in seinem Mittel einen Wendekreis beschreibt, der größer ist als der Wendekreis des rückwärtigen Radsatzes 12, vergrößert um den Prozentsatz des Vorlaufes des vorderen Radsatzes 14, was ungefähr ab einem Einschlagwinkel der Lenkvorrichtung 28 von 35 Grad eintritt.

Selbstverständlich ist die Übertragung eines Antriebs zu dem vorderen Radsatz 14 primär abhängig von dem an dem rückwärtigen Radsatz 12 herrschenden Schlupf, so daß auch bei Geradeausfahrt oder Kurvenfahrt und einem Schlupf von mehr als 2 bis 5 % der Freilauf 38 ständig geschlossen sein kann.

Sobald der Freilauf 38 geschlossen ist, wird die Höhe des maximal auf den vorderen Radsatz 14 übertragbaren Drehmoments von dem Rutschmoment der Kupplung 36 bestimmt. Dadurch wird eine Überlastung des Freilaufes 38, der Antriebswelle 40, des Differentials 26 und der Halbwellen 30 vermieden.

## Patentansprüche

1. Antriebsvorrichtung für einen zuschaltbaren Radsatz (14), insbesondere für den einer vorderen Achse (24) eines Kraftfahrzeuges (10), wobei zumindest ein weiterer ständig angetriebener Radsatz (12) und in dem Antriebsstrang zu dem zuschaltbaren Radsatz (14) ein Freilauf (38), der ein Voreilen des zuschaltbaren Radsatzes (14) gegenüber dem ständig angetriebenen Radsatz (12) zuläßt, eine Kupplung (36) zum wahlweisen Zuschalten des zuschaltbaren Radsatzes (14) und ein Differential (26) für den zuschaltbaren Radsatz (14) vorgesehen sind, dadurch gekennzeichnet, daß in dem Antriebsstrang zu dem zuschaltbaren Radsatz (14) die Kupplung (36) und der Freilauf (38) hintereinander geschaltet sind und die Kupplung (36) wahlweise ein- oder ausgerückt sein kann und als Überlastkupplung wirkt.

2. Antriebsvorrichtung nach Anspruch 1, dadurch gekennzeichnet, daß der Freilauf (38) sperrbar ist.

3. Antriebsvorrichtung nach Anspruch 1, dadurch gekennzeichnet, daß der Freilauf (38) in Abhängigkeit von der Fahrtrichtung des Kraftfahrzeuges (10) sperrbar ist.

4. Antriebsvorrichtung nach Anspruch 1, dadurch gekennzeichnet, daß der Freilauf (38) in Abhängigkeit von der Betätigung einer Bremse des Kraftfahrzeuges (10) sperrbar ist.

## Claims

1. Drive assembly for an engageable wheel set (14), especially for that of a front axle (24) of a motor vehicle (10), wherein there are provided at least one further constantly driven wheel set (12) and a freewheel (38) in the drive train to the engageable wheel set (14), which permits the engageable wheel set to overrun relative to the constantly driven wheel set (12), a clutch (36) for selectively engaging the engageable wheel set (14) and a differential (26) for the engageable wheel set (14), characterized in that the clutch (36) and the freewheel (38) are connected one after the other in the drive train to the engageable wheel set (14) and the clutch (36) can be selectively engaged or disengaged and acts as an overload clutch.

2. Drive assembly according to claim 1, characterized in that the freewheel (38) can be locked.

3. Drive assembly according to claim 1, characterized in that the freewheel (38) can be locked in dependence on the direction of travel of the motor vehicle (10).

4. Drive assembly according to claim 1, characterized in that the freewheel (38) can be locked in dependence on the actuation of a brake of the motor vehicle (10).

## Revendications

1. Dispositif d'entraînement pour une paire de roues enclenchable (14), en particulier pour celle d'un essieu avant (24) d'un véhicule à moteur (10), avec au moins une autre paire de roues (12) entraînée en permanence et, dans le train de transmission à la paire de roues enclenchable (14), un dispositif à roue libre (38) qui permet une avance de la paire de roues enclenchable (14) par rapport à la paire de roues (12) entraînée en permanence, un embrayage (36) pour l'enclenchement à volonté de la paire de roues enclenchable (14) et un différentiel (26) pour la paire de roues enclenchable (14), caractérisé en ce que, dans le train de transmission à la paire de roues enclenchable (14), l'embrayage (36) et le dispositif à roue libre (38) sont montés en série et l'embrayage (36) peut être engagé et désenclenché à volonté et joue le rôle d'embrayage de sécurité contre les surcharges.

2. Dispositif d'entraînement suivant la revendication 1, caractérisé en ce que le dispositif à roue libre (38) peut être bloqué.

3. Dispositif d'entraînement suivant la revendication 1, caractérisé en ce que le dispositif à roue libre (38) peut être bloqué en fonction de la direction de déplacement du véhicule à moteur (10).

4. Dispositif d'entraînement suivant la revendication 1, caractérisé en ce que le dispositif à roue libre (38) peut être bloqué en fonction de l'actionnement d'un frein du véhicule à moteur (10).